(19) Europäisches Patentamt
European Patent Office
Office européen des brevets

(11) Veröffentlichungsnummer: **0 617 076 A1**

(12) # EUROPÄISCHE PATENTANMELDUNG

(21) Anmeldenummer: **94103597.4**

(22) Anmeldetag: **09.03.94**

(51) Int. Cl.[5]: **C08K 3/22**, C08L 67/02, //(C08L67/02,67:02)

(30) Priorität: **22.03.93 DE 4309143**

(43) Veröffentlichungstag der Anmeldung: **28.09.94 Patentblatt 94/39**

(84) Benannte Vertragsstaaten: **DE FR GB IT NL**

(71) Anmelder: **BAYER AG**

**D-51368 Leverkusen (DE)**

(72) Erfinder: **Friedemann, Paul, Dipl.-Ing.**
**Peter-Walterscheidt-Strasse 65**
**D-51469 Bergisch Gladbach (DE)**
Erfinder: **Obermann, Hugo, Dr.**
**Wedaustrasse 39**
**D-41540 Dormagen (DE)**
Erfinder: **Magerstedt, Herbert, Dipl.-Ing.**
**Hölderlinstrasse 16**
**D-47445 Moers (DE)**
Erfinder: **Zander, Klaus, Dr.**
**Lierberg 38**
**D-45478 Mülheim (DE)**
Erfinder: **Leimann, Gerhard, Dipl.-Ing.**
**Hermelinstrasse 45**
**D-42657 Solingen (DE)**
Erfinder: **Wissem, Bernd**
**Rheindorfer Strasse 113**
**D-51371 Leverkusen (DE)**

(54) **Flammgeschützte PBT/PET-Formmassen.**

(57) Gegenstand der vorliegenden Erfindung sind flammngeschützte Polyesterformmassen auf Basis von Polybutylenterephthalat (PBT) und Polyethylenterephthalat (PET), die ein halogeniertes Flammschutzmittel und Antimonpentoxid als Flammschutzsynergisten enthalten.

EP 0 617 076 A1

Gegenstand der vorliegenden Erfindung sind flammgeschützte Polyesterformmassen auf Basis von Polybutylenterephthalat (PBT) und Polyethylenterephthalat (PET), die ein halogeniertes Flammschutzmittel und Antimonpentoxid als Flammschutzsynergisten enthalten.

Flammgeschützte Polyesterformmassen auf Basis von PBT und/oder PET mit halogenierten Flammschutzmitteln sind bekannt (vgl. z.B. EP-A-449 135, EP-A-65 777, DE-OS 3 228 544, EP-A-78 937, US-P-3 671 487, JP-59-149 954).

In diesen Publikationen werden Antimon-Verbindungen pauschal als Flammschutzsynergisten genannt. Sie enthalten keinen Hinweis auf Antimonpentoxid.

Aus EP-A-466 481 sind weiterhin flammgeschützte Formmassen auf Polybutylennaphthalindicarboxylaten bekannt, in denen u.a. auch Antimonpentoxid als Flammschutzhilfsmittel eingesetzt werden.

In JP-63-175 306 werden Polyester-Formmassen beschrieben, die mit Alkoxysilan behandeltes Antimonpentoxid als Flammschutzmittel einsetzen.

Weiterhin werden in JP-59-45 347 Formmassen aus Polyester-, halogeniertem Epoxy-Harz auf Basis von Bisphenol A und einem anorganischen Flammschutzhilfsmittel, wobei u.a. Antimonpentoxid erwähnt wird, beschrieben.

Es wurde gefunden, daß PBT/PET-Blends mit Flammschutzmitteln unter Verwendung von Antimonpentoxid als Synergisten ein gutes Kristallisationsverhalten zeigen, wodurch kurze Verarbeitungszyklen erreicht werden. Das gute Kristallisationsverhaltenist die Folge einer ausgeprägten Zweiphasigkeit solcher flammgeschützten PBT/PET-Blends. Die Zweiphasigkeit erkennt man daran, daß bei DSC-Messungen während der beiden Aufheizzyklen jeweils die vom PBT bzw. PET stammenden Schmelz-Peaks getrennt voneinander auftreten. Die Abkühlung bei der DSC-Messung zeigt auch doppelte Kristallisations-Peaks, die von der separaten Erstarrung des PET bzw. PBT verursacht werden. Die Kristallisations-Peaks treten bei hohen Temperaturen auf.

Formkörper aus den erfindungsgemäßen Formmassen weisen ein auf hohem Niveau verlaufendes temperaturabhängiges Modul-Verhalten auf was eine hohe Wärmeformbeständigkeit bedeutet. Dabei werden mit diesen Formmassen auch gute mechanische Eigenschaften erzielt.

Gegenstand der vorliegenden Erfindung sind flammgeschützte Polyester-Formmassen aus

A) 10 bis 60, vorzugsweise 10 bis 40 Gew.-% Polybutylenterephthalat,
B) 10 bis 60, vorzugsweise 15 bis 40 Gew.-% Polyethylenterephthalat,
C) 1 bis 20, vorzugsweise 5 bis 20 Gew.-% einer bromhaltigen organischen Verbindung,
D) 0,5 bis 7, vorzugsweise 1 bis 4 Gew.-% Antimonpentoxid,
E) 0 bis 50, vorzugsweise 10 bis 40 Gew.-% Verstärkungsmittel,

wobei die Summe aus A + B + C + D + E 100 ergibt.

Die als Komponenten A) und B) eingesetzten Polybutylen- und Polyethylenterephthalate sind allgemein bekannt und besitzen im allgemeinen eine Intrinsic-Viskosität von 0,4 bis 1,5 dl/g, vorzugsweise 0,5 bis 1,3 dl/g, gemessen in Phenol/o-Dichlorbenzol (1:1 Gew.-Teile) bei 25 C.

Die Komponente C) umfaßt bromhaltige nieder- oder hochmolekulare organische Verbindungen. Beispielhaft seien genannt:
Ethylen-1,2-bis(tetrabromphthalimid),
Polydibromstyrol,
Pentabrompolyacrylat,
Dekabromdiphenyloxid,
Tetrabrombisphenol A-haltige Flammschutzmittel.

Bevorzugt werden Ethylen-1,2-bis(tetrabromphthalimid) und die Tetrabrombisphenol A-haltigen Flammschutzmittel, epoxiertes Tetrabrombisphenol-A Harz und Tetrabrombisphenol-A-oligocarbonat.

Epoxiertes Tetrabrombisphenol-A ist ein bekanntes Diepoxidharz mit einem Molekulargewicht von etwa 350 bis etwa 2 100, vorzugsweise 360 bis 1 000, besonders bevorzugt 370 bis 400, und besteht im wesentlichen aus mindestens einem Kondensationsprodukt von Bisphenol A und Epihalogenhydrin und wird beschrieben durch die Formel (I)

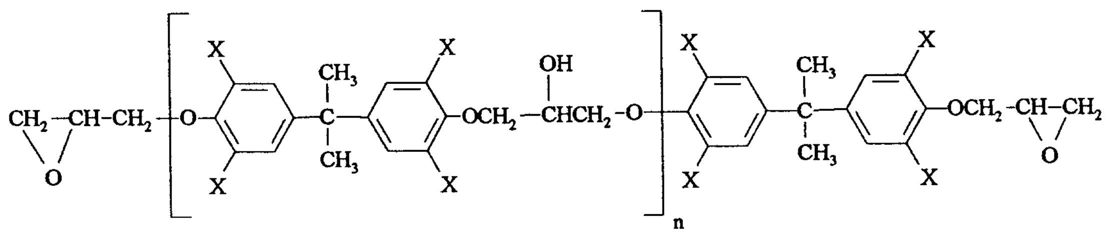

(I),

worin X Wasserstoff oder Brom darstellt und n eine Durchschnittszahl zwischen Null und weniger als 2,3 ist (vergl. z.B. EP-A 180 471).

Tetrabrombisphenol-A-oligocarbonat wird durch die Formel (II) beschrieben, wobei die Oligomere entweder mit Phenol oder mit Tribromphenol terminiert werden

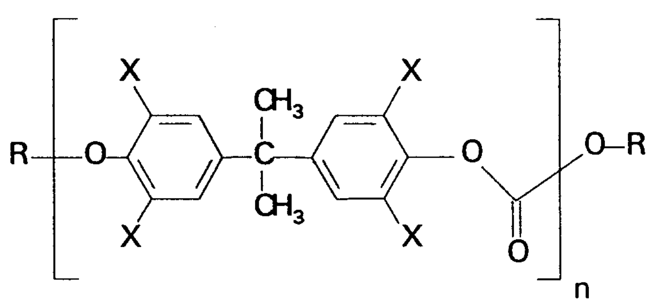

R =

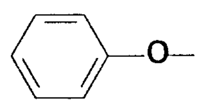

oder

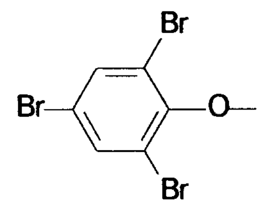

(II) ,

worin X Wasserstoff oder Brom darstellt, n ist eine Durchschnittszahl zwischen 4 und 7.

Tetrabrombisphenol-A-oligocarbonat ist bekannt und nach bekannten Verfahren herstellbar.

Antimonpentoxid (Komponente D) ist eine allgemein bekannte Verbindung.

Als Verstärkungsmittel (Komponente E) werden bevorzugt Glasfasern, insbesondere E-Glasfasern verwendet. Die Glasfasern sind geschlichtet und haben im allgemeinen eine mittlere Länge von 8 bis 15 mm und einen Durchmesser von 0,05 bis 0,5 mm. Glasfasern anderer Länge oder Durchmesser können ebenfalls verwendet werden.

Die erfindungsgemäßen Formmassen können anstelle von oder in Kombination mit Glasfasern auch Glaskugeln, Kohlenstoffasern, Fasern aus flüssig-kristallinen Polymeren oder anorganische Verstärkungsmaterialien enthalten. Dies sind beispielsweise Keramikfüllstoffe, wie Aluminium- und Bornitrid, oder mineralische Füllstoffe, wie Asbest, Talkum, Wollastonit, Microvit, Silikate, Kreide, calcinierte Kaoline, Glimmer und Quarzmehl. Diese können mit den üblichen Schlichten und Haftvermittlern auf Organosilanbasis, wie z.B. Trimethoxyaminopropylsilan beschichtet sein. Sofern andere Verstärkungsmaterialien außer Glasfasern allein verwendet werden, muß wenigstens eines dieser Materialien mit den üblichen Schlichten oder Haftvermittlern auf Organosilanbasis beschlichtet sein.

Darüber hinaus können die erfindungsgemäßen Formmassen übliche Additive wie z.B. Gleit- und Entformungsmittel, Nukleierungsmittel, Stabilisatoren, Schlagzähmoditikatoren sowie Farbstoffe und Pigmente enthalten.

Aus den erfindungsgemäßen Formmassen werden bevorzugt Formteile hergestellt, die einer hohen Wärmebeanspruchung ausgesetzt sind (beispielsweise Lampenfassungen, Steckerleisten in der Elektrotechnik).

## Beispiele

Eingesetzte Komponenten:

| | |
|---|---|
| Polybutylenterephthalat (PBT): | Intrinsic-Viskosität 0,92 dl/g (gemessen in Phenol/o-Dichlorbenzol (1:1 Gew.-Teile) bei 25 C). |
| Polyethylenterephthalat (PET): | Intrinsic-Viskosität 0,62 dl/g (gemessen in Phenol/oDichlorbenzol (1:1 |

Gew.-Teile) bei 25 C).

Glasfasern: Owens Corning 429:
Tetrabrombisphenol-A-oligocarbonat: BC52HP, Great Lakes
Bromiertes Epoxidharz (Epoxid): Makhteshim® F2400, Makhteshim
Ethylen-1,2-bis-tetraphthalimid: Saytex® BT93, Ethyl Corporation
Antimonpentoxid: Nyacol® A-1582, Nordmann Rassmann GmbH
Antimontrioxid
Natriumantimonat

Aus den einzelnen Komponenten wird auf einer Zweiwellenschneckenmaschine (Typ ZSK 32, Hersteller Werner und Pfleiderer) bei 275 C bis 285 C eine homogene Schmelzemischung hergestellt, die über eine Düse in ein Wasserbad abgesponnen und zu einem zylinderformigen Granulat zerkleinert wird. Das getrocknete Granulat wird auf üblichen Spritzgußmaschinen bei 270 C Massetemperatur und 80 C Werkzeugtemperatur verarbeitet.

DSC-Messungen an Granulaten der Vergleichsversuche 1 bis 3 sind dadurch gekennzeichnet, daß nur während der ersten Aufheizungen die PBT- und PET-typischen Schmelz-Peaks erkennbar sind. Bei der Abkühlung tritt nur jeweils ein Erstarrungs-Peak auf und bei der zweiten Aufheizung ist nur noch jeweils ein Schmelz-Peak zu beobachten. Die Temperaturlagen der Peaks während der Abkühlungen und der zweiten Aufheizungen sind zu deutlich niedrigeren Temperaturen verschoben und nicht mehr dem PBT oder PET zuzuordnen. Sie zeigen an, daß PBT und PET nicht mehr als getrennte Phasen vorliegen. Dadurch verschlechtert sich das Kristallisationsverhalten dieser Blends, was bei der Spritzgußverarbeitung zu verlängerten Verarbeitungszyklen führt. Der Torsionsschwingversuch nach DIN 53 445 an gespritzten Stäben (80 x 10 x 4 mm) ergibt für die Vergleichs-Versuche Schubmodulverläufe, die nur bis 240 C meßbar sind und auf einem niedrigen Niveau verlaufen, womit eine herabgesetzte Wärmeformbeständigkeit verbunden ist.

**Tabelle 1:** Zusammensetzung

| | Vergleiche | | | Erfindungsgemäß | | | | | | |
|---|---|---|---|---|---|---|---|---|---|---|
| Bestandteile | 1 | 2 | 3 | 4 | 5 | 6 | 7 | 8 | 9 | 10 |
| PBT (I.V. = 0,92 dl/g) | 30,5 | 30,5 | 30,5 | 30,5 | 30,5 | 27 | 28,5 | 39 | 14 | 35 |
| PET (I.V. = 0,62 dl/g) | 25 | 25 | 25 | 25 | 25 | 30 | 25 | 30 | 45 | 30 |
| Glasfaser | 30 | 30 | 30 | 30 | 30 | 30 | 30 | 20 | 30 | 20 |
| Tetrabrombisphenol-A-oligocarbonat | 10 | 10 | - | 10 | - | - | - | - | - | - |
| Bromiertes Epoxidharz | - | - | 10 | - | 10 | - | - | - | - | - |
| Ethylen-1,2-bis-tetrabromphthalimid | - | - | - | - | - | 10 | 12 | 8 | 8 | 12 |
| Antimonpentoxid | - | - | - | 4,5 | 4,5 | 3 | 4,5 | 3 | 3 | 3 |
| Antimontrioxid | 4,5 | - | 4,5 | - | - | - | - | - | - | - |
| Natriumantimonat | - | 4,5 | - | - | - | - | - | - | - | - |

**Tabelle 2:** Eigenschaften

| | | | | | | | | | | |
|---|---|---|---|---|---|---|---|---|---|---|
| Temp. aus DSC 1) (°C) | | | | | | | | | | |
| 1. Aufheizung | | | | | | | | | | |
| $TS_1$ | 218 | 223 | 225 | 227 | 227 | 227 | 227 | 228 | 226 | 228 |
| $TS_2$ | 250 | 254 | 254 | 261 | 262 | 263 | 262 | 263 | 263 | 263 |
| Kühlen | | | | | | | | | | |
| $TK_1$ | 120 | 164 | 141 | 196 | 192 | 213 | 210 | 211 | 222 | 214 |
| $TK_2$ | - | - | - | 189 | 196 | 186 | 193 | 196 | 197 | 198 |
| 2. Aufheizung | | | | | | | | | | |
| $TS_1$ | 177 | 164 | 177 | 217 | 216 | 219 | 217 | 222 | 219 | 221 |
| $TS_2$ | - | - | - | 243 | 242 | 251 | 245 | 248 | 256 | 249 |
| Schubmodul 2) G' (MPa) bei | | | | | | | | | | |
| 200°C | 216 | 309 | 210 | 431 | 391 | 444 | 443 | 370 | 523 | 405 |
| 210°C | 108 | 225 | 110 | 375 | 325 | 389 | 381 | 325 | 479 | 360 |
| 220°C | 33 | 70 | 52 | 328 | 216 | 277 | 254 | 226 | 416 | 230 |
| 230°C | 14 | 20 | 18 | 51 | 50 | 124 | 115 | 55 | 356 | 86 |
| 240°C | 3 | 8 | 4 | 42 | 39 | 99 | 85 | 44 | 298 | 67 |
| 250°C | - | - | - | 23 | 21 | 50 | 40 | 25 | 169 | 30 |
| UL-94 | VO | VO | VO | VO | VO | VO | VO | VO | VO | VO |

1) DSC-30-Meßzelle des Systems TA 4000 von Fa. Mettler
Konstante Versuchsbedingungen:
Aufheizrate = 10 K/min bis 300 C
Abkühlrate = 10 K/min
TS = Schmelztemperaturen
TK = Kristallisationstemperaturen

2) Torsionsschwingversuch mittels erzwungener Schwingung; Gerät Rheometric RDA II bei konstant 1 Hertz am Prüfkörper.

**Patentansprüche**

1. Polyester-Formmassen aus
   A) 10 bis 60 Gew.-% Polybutylenterephthalat,
   B) 10 bis 60 Gew.-% Polyethylenterephthalat,
   C) 1 bis 20 Gew.-% einer bromhaltigen organischen Verbindung,
   D) 0,5 bis 7 Gew.-% Antimonpentoxid und
   E) 0 bis 50 Gew.-% Verstärkungsmittel,
   wobei die Summe aus A + B + C + D + E 100 ergibt.

2. Polyester-Formmassen gemäß Anspruch 1, mit
   A) 10 bis 40 Gew.-% Polybutylenterephthalat,
   B) 15 bis 40 Gew.-% Polyethylenterephthalat,
   C) 5 bis 20 Gew.-% einer bromhaltigen organischen Verbindung,
   D) 1 bis 4 Gew.-% Antimonpentoxid und
   E) 0 bis 50 Gew.-% Verstärkungsmittel,
   wobei die Summe aus A + B + C + D + E 100 ergibt.

3. Polyester Formmasse gemäß Anspruch 2, worin 10 bis 40 Gew.-% Verstärkungsmittel zugesetzt werden.

4. Polyester-Formmassen gemäß Anspruch 1 und 2, wobei Komponente C) Ethylen-1,2-bis-(tetrabromphthalimid), Polydibromstyrol, Pentabrompolyacrylat, Dekabromdiphenyloxid, epoxidiertes Tetrabrombisphenol-A Harz und Tetrabrombisphenol-A-oligocarbonat.

5. Verwendung der Formmassen gemäß Anspruch 1 zur Herstellung von Formköpern.

6. Formköper, hergestellt aus Formmassen gemäß Anspruch 1.

Europäisches Patentamt

# EUROPÄISCHER RECHERCHENBERICHT

Nummer der Anmeldung
EP 94 10 3597

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int.Cl.5) |
|---|---|---|---|
| A | EP-A-0 063 031 (CELANESE CORP.)<br>* Anspruch 1 *<br>----- | 1 | C08K3/22<br>C08L67/02<br>//(C08L67/02, 67:02) |
| | | | **RECHERCHIERTE SACHGEBIETE (Int.Cl.5)** |
| | | | C08K<br>C08L |

Der vorliegende Recherchenbericht wurde für alle Patentansprüche erstellt

| Recherchenort | Abschlußdatum der Recherche | Prüfer |
|---|---|---|
| DEN HAAG | 1. Juli 1994 | Schueler, D |

**KATEGORIE DER GENANNTEN DOKUMENTE**

X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder nach dem Anmeldedatum veröffentlicht worden ist
D : in der Anmeldung angeführtes Dokument
L : aus andern Gründen angeführtes Dokument

& : Mitglied der gleichen Patentfamilie, übereinstimmendes Dokument

EPO FORM 1503 03.82 (P04C03)